Europäisches Patentamt

European Patent Office

Office européen des brevets

(19)

(11) Veröffentlichungsnummer: **0 094 984**

**A1**

(12) **EUROPÄISCHE PATENTANMELDUNG**

(21) Anmeldenummer: **82106212.2**

(22) Anmeldetag: **12.07.82**

(51) Int. Cl.³: **B 23 K 28/00**

(43) Veröffentlichungstag der Anmeldung:
**30.11.83 Patentblatt 83/48**

(84) Benannte Vertragsstaaten:
**AT BE CH DE FR GB IT LI LU NL SE**

(71) Anmelder: **Wallner, Manfred J.**
**Nümmener Strasse 53**
**D-5650 Solingen 1(DE)**

(72) Erfinder: **Wallner, Manfred J.**
**Nümmener Strasse 53**
**D-5650 Solingen 1(DE)**

(54) Lichtbogenschweiss- oder Schneidbrenner.

(57) Bei diesem Brenner ist die Kühlwasserführung innerhalb des Elektroden-oder Spannhülsengehäuses (2) und/oder innerhalb des Düsenkörpers (1) so ausgebildet, daß innerhalb eines ringförmigen Spaltes (4, 35) geführt wird und das zu kühlende Teil voll umgibt, wobei der Kühlwasserfluß innerhalb des Ringspaltgehäuses nicht gegenläufig erfolgt. Je nach Brennerverwendung kann zwischen Elektrodengehäuse (2) und Düsenkörper (1) zur elektrischen Trennung ein Isolator (6) verwendet werden, wobei durch Querverbindungen (5) die Wasserführung von einem Ringspalt in den des anderen Körpers erfolgt.

Das Spannhülsen- oder Elektrodengehäuse (2) ist so ausgebildet, daß das Gas achsial der Elektrode (3) geführt und durch achsial verlaufende Bohrungen oder Schlitze (13, 14, 15, 16) laminar geführt wird oder durch einen Winkel der Bohrungen zur Elektrodenachse in Rotation versetzt wird. Eine Vorverteilung erfolgt beim Eintritt der Gase in das Spannhülsengehäuse (2) durch achsial verlaufende Bohrungen (37) Die Elektrode wird in einer Spannzange (41) oder einem Schaft (24) gehalten, wobei die Spannzange (11, 41) oder der Schaft (24) kopfseitig in einer zentrischen Passung (31) des Spannhülsengehäuses (2) geführt werden, während der Elektrodenschaft (3) in einer zentrischen Passung (22) am Fuß des Spannhülsengehäuses geführt wird.

Der Schaft (24) der Elektrode ist so ausgebildet, daß das Aufliegen der planparallelen Flächen (25) von Elektrodenschaft und Spannhülsengehäuse eine definierte Tiefenbegrenzung der Elektrode ergibt.

Durch eine umlaufende Dichtung (47) am Elektrodenschaft (24) oder der Spannzange (11, 41) und einer umlaufenden Dichtung (46) am Spannkappenkopf (42) können innerhalb des Spannhülsenkörpers (2) zwei getrennte Gasführungen für Primär- und Sekundärgas erzeugt werden.

Die Elektrode (3) hat eine ringförmige Nut (50) innerhalb des Schaftes (24) in welche durch Fliesspressung einer Ringnut Material des Schaftes gepreßt wird und die Elektrode in dieser Position sichert.

EP 0 094 984 A1

Croydon Printing Company Ltd.

Fig. 1

**0094984**

Lichtbogenschweiß- oder Schneidbrenner

Die Erfindung betrifft die Kühlung, die Primär- und Sekundärgasführung sowie die Anodenzentrierung-und Justierung eines Lichtbogenschweiß- oder Schneidbrenners.

Optimale Kühlung, genau abgestimmte Plasma-und Schutzgasführung sowie eine sichere Zentrierung sind die entscheidenen Punkte für die sichere und zuverlässige Funktion eines Lichtbogenschweiß- oder Schneidbrenners sowie Plasmabrenners und dessen problemlose Handhabung.

Während es heute noch weitgehend üblich ist,das Kühlwasser innerhalb des Brennerkörpers einseitig zuzuführen und gegenläufig abzuführen, also keine gleichmäßige, kontrollierte Wärmeabfuhr entlang der hitzebelasteten Teile zu erzielen, ist die Aufgabe der vorliegenden Erfindung eine optimale, allseitig gleichmäßige Wärmeabfuhr der hitzebelasteten Teile.

Die Zuführung des Plasmagases erfolgt ebenfalls in den meisten Fällen unkontrolliert ohne der Bedeutung dieses Punktes große Bedeutung beizumessen. In letzter Zeit werden keramische Gasverteiler in Düsennähe verwendet um das Gas in die richtige Rotation oder laminare Strömung zu bringen.

Auch die Zuführung des Schutzgases erfolgt in der Regel einseitig durch eine Bohrung im Brennerkörper. Die dadurch verursachte Turbulenz des verwendeten Gases wird häufig durch in die Düse eingelegte Siebe versucht zu verringern oder aufzuheben ( Gaslinse ).

Die Klemmung und damit häufig die Zentrierung der Elektrode, erfolgt vorzugsweise durch seitlich im Brennerkörper befindliche Klemmschrauben oder durch am Brennerende angeordnete Spannzangen mit Klemmung,wobei teilweise die vorerwähnten keramischen Gasverteiler die Zentrierung in der Düse übernehmen. Die Einstellung der Elektrodenlänge erfolgt in fast allen bekannten Fällen durch die Verwendung einer Tiefenlehre.

Alle diese Punkte zusammengenommen sind Hauptursache für viele Probleme, welche sich beim Einsatz eines Lichtbogenschweiß- oder Plasma-Brenners ergeben.

Ziel der vorliegenden Erfindung, wie in den Ansprüchen gekennzeichnet, ist es, hier Abhilfe zu schaffen und durch neue Wege einen einfach zu handhabenden, mit optimaler Kühlwasser- und Gasführung versehenen Brenner zu ermöglichen.

Die durch die Erfindung gekennzeichneten Vorteile sind hauptsächlich darin zu sehen, daß bei indirekt gekühlten Düsen und Anoden eine Wärmeableitung und damit verbunden eine so hohe Belastbarkeit erzielt wird, wie es bisher fast nur bei direkt gekühlten Bauteilen erreichbar war sowie eine einfache Handhabung durch den Wegfall von Lehren oder Werkzeugen bei der Elektrodenjustierung zu erreichen.

Im folgenden wird die Erfindung getrennt nach den verschiedenen Kriterien eines Brenners anhand von Zeichnungen näher erläutert.

Fig. 1   zeigt schematisch die Kühlwasserführung entlang der Elektrodenführung und im Bereich der Kathode ( Düse )

Fig. 2   zeigt die Gasführung innerhalb des Brenners und die Gasverteilung innerhalb der Lichtbogenkammer

Fig. 3   zeigt die Gasführung mit der Möglichkeit zur Erzielung eines laminaren Gasflusses mit turbulenzfreier Abdeckung des Schmelzbades

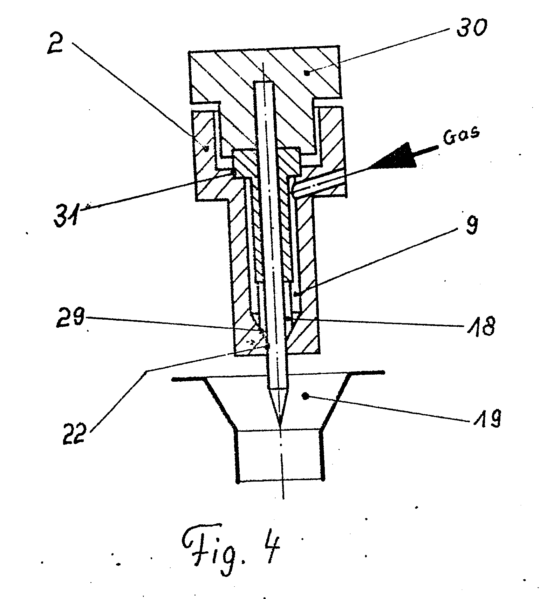

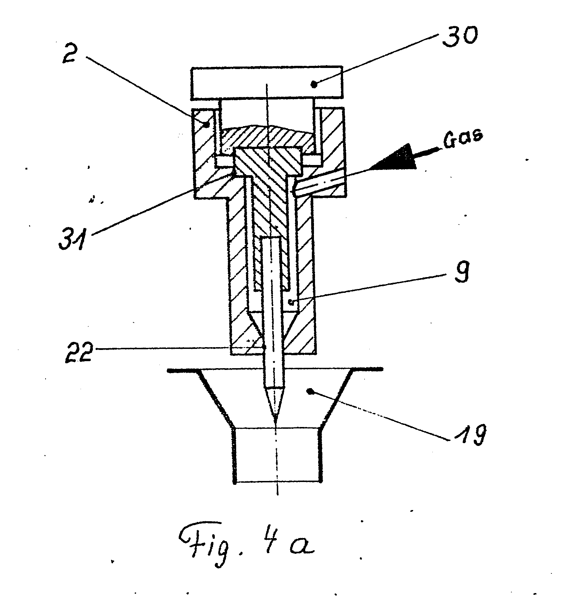

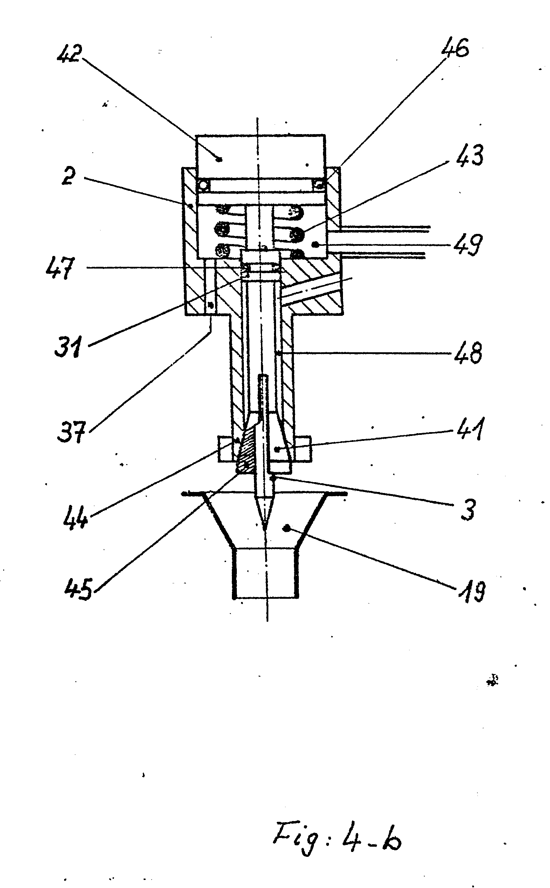

Fig. 4   veranschaulicht die Elektrodenzentrierung
u.4 a   innerhalb des Brennersytems
u.4 b   zeigt die Elektrodenzentrierung bei einer selbst spannenden Spannzange

Fig. 5   zeigt die Elektrodenlängsjustierung
Fig. 6   Elektrode und deren Ausführung

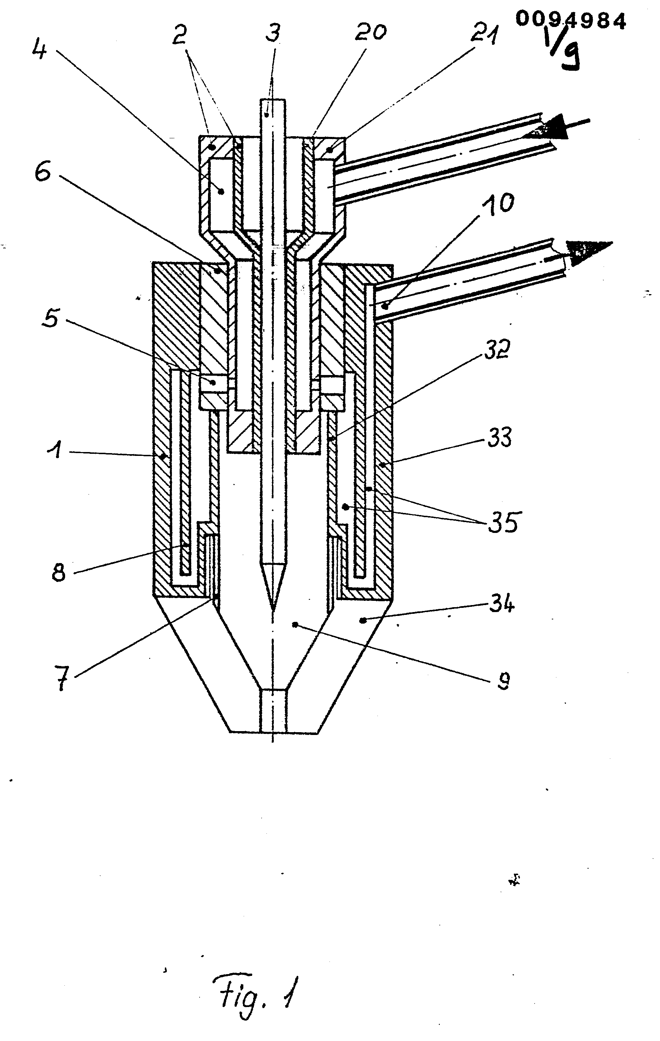

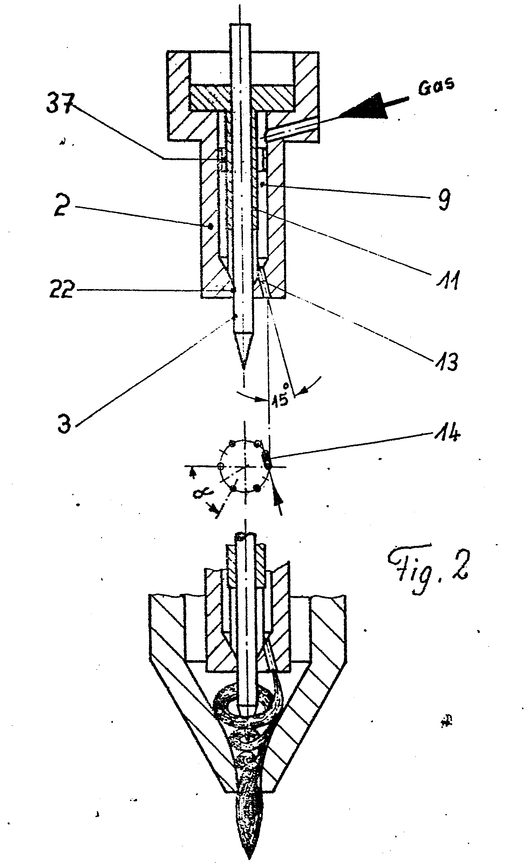

## A. Kühlwasserführung    Fig. 1

Das der Erfindung zugrundeliegende Elektroden- und Spannzangengehäuse eines Lichtbogenschweiß- oder Schneidbrenners besteht vorzugsweise aus zwei Teilen, dem äußeren Wasserführungskörper ( 1 ) und dem innenliegenden Elektroden- bzw. Spannhülsenkörper ( 2 ). Da die Elektrode ( 3 ) die größte Wärmeaufnahme hat, erfolgt die Zufuhr des Kühlwassers vorzugsweise über den Spannhülsenkörper ( 2 ), wobei das Wasser in einem möglichst schmalen Spalt ( 4 ) zwischen Wasserführungskörper ( 1 ) und Elektrodenkörper ( 2 ) soweit wie möglich nach unten geführt wird und dabei, durch die dadurch entstehende hohe Strömungsgeschwindigkeit, eine hohe Wärmeableitung hat. Über Querbohrungen ( 5 ) fließt das Wasser durch den Isolator ( 6 ) in den, die Lichtbogenkammer umgebenden Düsenkörper ( 7 ), wobei durch eine eingesetzte Zunge ( 8 ) ein konstanter Wasserfluß entlang des hochtemperaturbelasteten Gasraumes ( 9 ) gewährleistet wird, welcher erst im Bereich der Einschnürdüse in den Rücklaufkanal ( 10 ) geleitet wird.

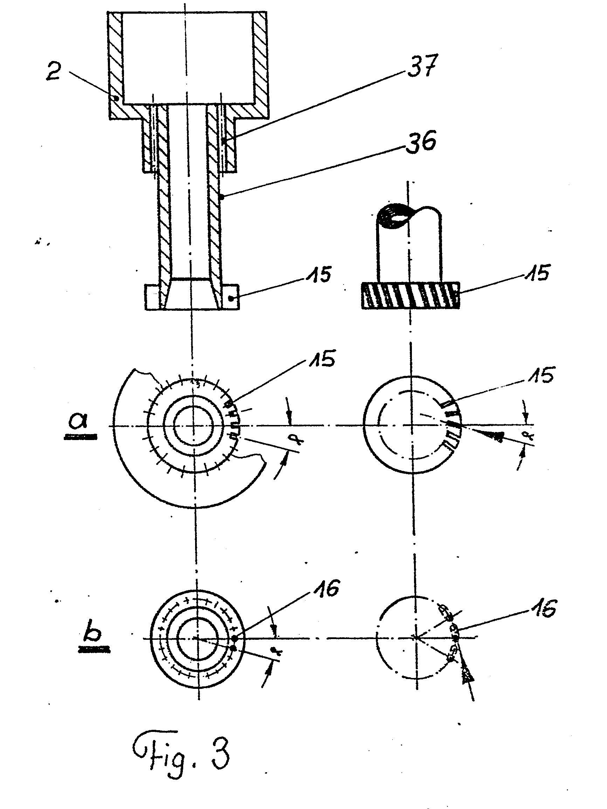

B. Primärgasführung    Fig. 2

Die Gasführung erfolgt vorzugsweise direkt am oberen Rand des Elektroden- bzw. Spannzangengehäuses ( 2 ), wobei das Gas entlang der Elektrode (3) oder an der Außenseite des Elektrodenkörpers (11) geführt wird, wobei eine Vorverteilung bereits durch achsial angeordnete Verteilerbohrungen (37) möglich ist. Am Austritt der Gase in den Elektrodenraum (9) erfolgt eine laminare Ausströmung durch achsial angeordnete Schlitze bzw. Bohrungen (13 ) oder eine rotierende Ausströmung durch radiale in einem bestimmten Winkel zur Elektrode angeordnete Schlitze oder Bohrungen(14).

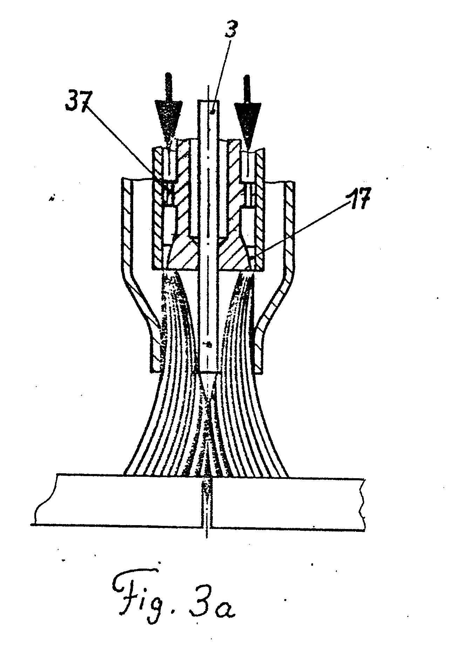

C. Sekundärgasführung    Fig. 3 und 3 a

Um eine möglichst laminare, turbulenzfreie Ausströmung der Schutzgase zu erreichen, wird das Sekundärgas bereits an der Eintrittsstelle am Brennerkörper über achsial verteilte Bohrungen ( 37 ) vorverteilt. Durch die Länge der Bohrungen in Verbindung mit der vorgesehenen Sekundärgasmenge des Brenner wird bereits ein gleichmäßiger laminarer Gasfluß erreicht.
Bevor das Gas den Düsenraum erreicht hat, wird es durch weitere, in größerer Anzahl vorgesehene Bohrungen oder Schlitze ( 16 ) weiterverteilt, wobei durch eine Querschnittserweiterung zur Austrittsseite eine weitere Beruhigung der Gase erreicht wird. Anstelle der Bohrungen oder Schlitze ( 15 ) kann auch ein gleichmäßiger Ringspalt ( 17 ) verwendet werden. Dadurch wird in Verbindung mit einer optimalen Geometrie der Gasdüse ein absolut laminarer, turbulenzfreier Sekundärgasstrom erreicht.

0094984

Die der Erfindung zugrundeliegende Elektrodejustierung zeichnet sich dadurch aus, daß die Elektrode nahe der Spannkappe ( 30 ) und entgegengesetzt nahe des Gasraumes ( 9 ) selbstzentrierend (31 ) geführt wird. Bei der Verwendung einer Spannhülse ( 18 ) wird die Spannhülse am Gaseintrittsraum ( 19 ) vorzugsweise in einer Passung ( 22 ) zwangsgeführt und auch am Spannhülsenkegel ( 21 ) durch eine Passung (29) im Spannhülsengehäuses (2) zentriert ohne einen keramischen Führungsring oder Gasverteiler in der Düse verwenden müssen.

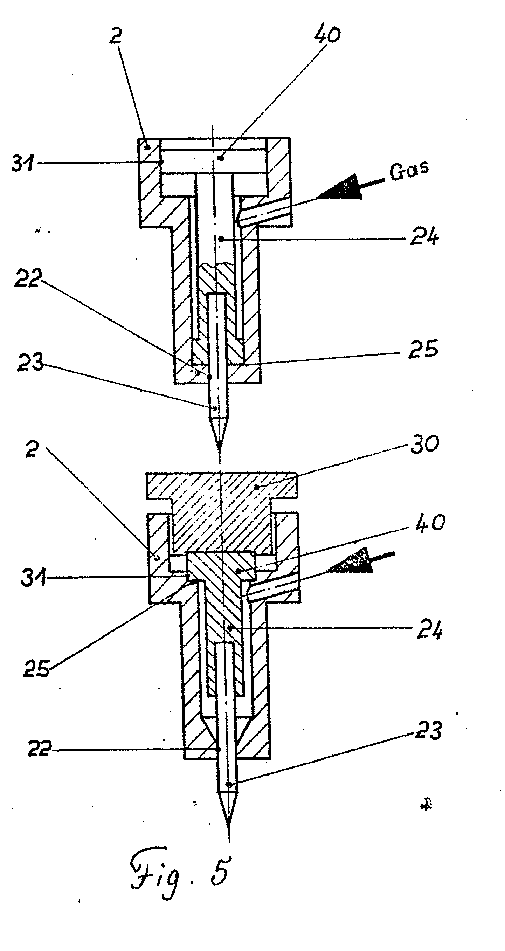

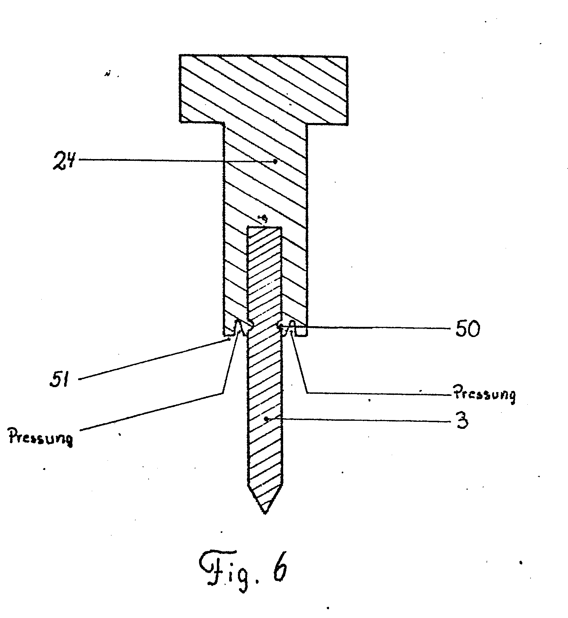

E. Elektrodenlängsjustierung  Fig. 5 + 6

Bei dem der Erfindung zugrundeliegenden Brenner kann alternativ auf eine Klemmung durch eine Spannhülse für die Elektrode vollkommen verzichtet werden.

Eine nicht abschmelzende Elektrode ( 23 ) vorzugsweise aus Wolfram, wird in einen Elektrodenkörper ( 24 ) eingepreßt. Dieser Elektrodenkörper hat an einem Ende eine zylinderförmige Erweiterung ( 40), welche in die Passung ( 31 ) im Spannhülsengehäuse ( 2 ) eingreift und dadurch zwangsgeführt wird, wobei der Elektrodenschaft ( 23 ) durch eine Passung ( 22 ) im Spannhülsengehäuse ( 2 ) zentriert wird und somit achsial des Brenners absolut zentrisch verläuft. Durch die Auflagefläche ( 25 ) im Spannzangengehäuse ( 2 ) wird die Elektrode in der Tiefe zur Düse begrenzt. Eine Einstellehre wird nicht mehr benötigt. Durch Festziehen der Spannkappe ( 3 0 ) wird der Elektrodenkörper ( 24 ) so stark auf die Fläche ( 25 ) im Spannzangengehäuse ( 2 ) gepreßt, daß ein guter elektrischer Übergang gewährleistet ist.

0094984

PATENTANSPRÜCHE

1. Kühlwasserführung und Gestaltung des Spannhülsengehäuses vorwiegend für Schweiß- und Schneidbrenner mit offenem Lichtbogen sowie für Plasma-Brenner, wobei die Elektrode und/oder die Düse nicht Kühlmittel durch-oder umflossen wird, sondern in einem wassergekühlten, gasgekühlten,luftgekühlten oder ungekühlten Halter innerhalb des Brenners geführt wird, wobei zwischen der inneren Wand ( 20 ) des Spannhülsengehäuses und dem äußeren Körper ( 21 ) ein Spalt ( 4 ) verbleibt, über dem das Kühlmittel entlang des Körpers in achsialer Richtung bis zu einer Verbindung ( 5 ) läuft, die den Kühlmittelfluß zum Düsengehäuse ( 7 ) weiterleitet, wobei auch hier ein Spalt ( 35 ) zwischen innerem ( 32 ) und äußerem ( 33 ) Körper das Kühlmittel bis in unmittelbare Nähe der Düse ( 34 ) leitet, um von dort unter einer umlaufenden Trennwand ( 8 )wiederum über einen Ringspalt in den Rücklaufkanal ( 19 ) abgeleitet zu werden.

2. Kühlwasserführung nach Anspruch 1, dadurch gekennzeichnet, daß das Spannhülsengehäuse ( 2 ) durch einen Isolator ( 6 ) aus elektrisch nicht leitendem Material, vorzugsweise Kunststoff oder Keramik, elektrisch von Düsengehäuse ( 1 ) isoliert ist.

3. Kühlwasserführung nach Anspruch 1, dadurch gekennzeichnet, daß das Spannhülsengehäuse ( 2 ) mit dem Düsenkörper ( 1 ) verbunden ist oder eine Einheit darstellt.

4. Kühlwasserführung nach Ansprüchen 1-3, dadurch gekennzeichnet daß der Ringspalt ( 4 ) zur Kühlwasserführung nur innerhalb des Spannhülsengehäuses ( 2 ) verwendet wird.

5. Kühlwasserführung nach den Ansprüchen 1-3, dadurch gekennzeichnet, daß der Ringspalt ( 36 ) zur Kühlwasserführung nur innerhalb des Düsenkörpers ( 1 ) verwendet wird.

6. Kühlwasserführung nach den Ansprüchen 1-5, dadurch gekennzeichnet, daß der Ringspalt ( 4 ) durch eine Distanz zwischen dem Elektrodengehäuse ( 2 ) und dem Isolator ( 6 ) gebildet wird.

0094984

7. Gasführung, dadurch gekennzeichnet, daß das Primärgas entlang der Elektrode ( 3 ) innerhalb des Spannhülsengehäuses ( 2 ) geführt wird und durch achsial verlaufende Bohrungen (13-14-16) laminar geführt wird.

8. Gasführung nach Anspruch 7, dadurch gekennzeichnet, daß die achsial verlaufenden Bohrungen ( 13-14-16) in einem Winkel zur Elektrodenachse angeordnet sind.

9. Gasführung nach Anspruch 7, dadurch gekennzeichnet, daß die achsial verlaufenden Öffnungen zur Gasführung als Schlitze ( 15 ) ausgebildet sind.

10. Gasführung, dadurch gekennzeichnet, daß das Primärgas an der Außenseite ( 36 ) des Spannhülsengehäuses ( 2 ) geführt wird und an der Austrittsseite in den Gasraum durch achsial verlaufende Bohrungen ( 16 ) laminar geführt wird.

11. Gasführung nach Anspruch 10, dadurch gekennzeichnet, daß das Gas an der Austrittsseite in den Gasraum durch achsial verlaufende Schlitze ( 15 ) laminar geführt wird.

12. Gasführung nach den Ansprüchen 10 u. 11, dadurch gekennzeichnet, daß die Austrittsöffnungen (13-14-15-16) für das Gas in einem Winkel zur Elektrodenachse verlaufen.

13. Gasführung nach den Ansprüchen 10-12, dadurch gekennzeichnet, daß eine Vorverteilung des Gases bereits beim Gaseintritt in das Spannhülsengehäuse durch achsial verlaufende Bohrungen (37) in Richtung Elektrodenachse vorgenommen wird.

14. Elektrodenzentrierung, dadurch gekennzeichnet, daß die Elektrode (3) in einer Druckspannzange (11) geführt wird, welche kopfseitig in einer zentrischen Passung (31 ) des Spannhülsengehäuses (2) geführt wird und am anderen Ende in einer dem Durchmesser der Elektroden entsprechende Passung (22) des Spannhülsengehäuses geführt wird.

0094984

15. Elektrodenzentrierung nach Anspruch 14, dadurch gekennzeichnet, daß die Elektrode in einer Zug-Spannzange (41) geführt wird, welche kopfseitig in einer Spannkappe (42) festgehalten wird, welche durch eine Feder (43) gespannt wird, daß die Spannzange (41) in den Konus (44) des Spannhülsengehäuses (2) gezogen wird und die Drucklippen (45) der geschlitzten Spannzange gegen den Elektrodenschaft (3) gepreßt werden. Der Gasraum wird dabei durch eine den Spannkappenrand umlaufende Dichtung (46) gegen die Wand des Spannhülsengehäuses (2) abgedichtet, wobei durch Druck auf den Spannkappenkopf (42 ) die Spannzange (41) aus dem Konus (44) frei kommt und die Elektrode (3) durch Lösen der Drucklippen (45) in achsialer Richtung bewegt werden kann.

16. Elektrodenzentrierung nach den Ansprüchen 14+17, dadurch gekennzeichnet, daß die Spannzange (41) oder der Elektrodenschaft (24) an der Zentrierung (31) mit einer umlaufenden Dichtung (47) vor- zugsweise einen O-Ring gegen den Gasraum (48) abgedichtet wird, sodaß im Spannkappenraum (49) ein separater Gasraum entsteht, über welchem ein sekundäres Gas zugeführt werden kann, welches über die Bohrungen (37) entlang des Spannzangengehäuses (2) in den Düsenraum (19) geführt werden kann.

17. Elektrodenzentrierung, dadurch gekennzeichnet, daß die Elektrode (3) in einem leitenden Schaft (24) sitzt, welcher kopfseitig in einer zentrischen Passung (31) des Spannhülsengehäuses geführt wird und am anderen Ende in einer dem Durchmesser der Elektroden entsprechenden Passung (22) des Spannhülsengehäuses geführt wird.

18. Elektrodenlängsjustierung nach Anspruch 17, dadurch gekennzeichnet, daß der Elektrodenkopf (25) plan auf einer Fläche (25) der Passung (31) des Spannhülsengehäuses aufliegt und somit die Tiefe der Elektrode im Brenner begrenzt.

19. Elektrodenlängsjustierung nach Anspruch 17, dadurch gekennzeichnet, daß der Schaft des Elektrodenkörpers (24) fußseitig eine planparallele Fläche (25) besitzt, die am Boden des Spannhülsengehäuses so aufliegt, daß dadurch die Tiefe der Elektrode im Brenner begrenzt wird.

20. Elektrode nach den Ansprüchen 17-19, dadurch gekennzeichnet, daß die Elektrode (3) mit einer umlaufenden Nut (50) versehen ist, welche sich in eingepreßtem Zustand unterhalb der Plasnfläche (51) des Schaftes (24) befindet, wobei das die Elektrode (3) umgebende Material ringförmig so gestaucht wird, daß das durch den Stauchvorgang wegfließende Material in die Nut (50) der Elektrode gepreßt wird und sich si eine formschlüssige Verbindung zwischen Elektrode (3) und Schaft (24) ergibt.

Fig. 1

Fig. 2

0094984

Fig. 3

0094984

Fig. 3a

Fig. 4

0094984

Fig. 4a

0094984

Fig: 4-b

0094984

Fig. 5

24

51

Pressung

50

Pressung

3

Fig. 6

**0094984**

Nummer der Anmeldung

EP  82 10 6212

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 740 522  (E. MUEHLBERGER) * Figuren 1, 5a, 5b; Spalte 4, Zeile 48 - Spalte 11, Zeile 46 * | 1-3,10 ,12,17 | B 23 K  28/00 |
| | --- | | |
| A | DE-B-2 306 022  (VYSOKA SKOLA BANSKA) * Spalte 2, Zeilen 46-51; Figuren * | 1,4,5, 10,11 | |
| | --- | | |
| A | DE-A-2 533 981  (H. WACLAWICZEK) * Figur 1; Seite 6 * | 1,16 | |
| | ----- | | |
| | | | **RECHERCHIERTE SACHGEBIETE (Int. Cl. ³)** |
| | | | B 23 K   9/00 B 23 K  28/00 |

Der vorliegende Recherchenbericht wurde für alle Patentansprüche erstellt.

| Recherchenort BERLIN | Abschlußdatum der Recherche 17-08-1983 | Prüfer WUNDERLICH J E |
|---|---|---|